# EUROPEAN PATENT APPLICATION

(11) **EP 3 540 312 A1**
(43) Date of publication of application: **18.09.2019**
(21) Application number: 19162749.6
(22) Date of filing: 14.03.2019
(51) Int. Cl.: F23R 3/00, F23R 3/50, F23R 3/60, F23R 3/06, F23R 3/26

(54) **COMBUSTOR LINER PANEL WITH CASTELLATED RAIL**

(30) Priority: 14.03.2018 US 201815921376
(71) Applicant: United Technologies Corporation, Farmington, CT 06032 (US)
(72) Inventor: PORTER, Steven D., Wethersfield, CT Connecticut 06109 (US); ICHIHASHI, Fumitaka, West Hartford, CT Connecticut 06119 (US)
(74) Representative: Dehns

(57) **Abstract**

A combustor panel (110) for a gas tubine comprises a surface (144) extending from a first end (148) of the combustor panel (110) to a second end (146) of the combustor panel (110) opposite the first end (148). A first rail (160) located proximate the first end (148) extends from the surface (144) of the combustor panel (110). The first rail (160) defines a plurality of channels (178). The first rail (160) is formed a preselected distance away from the first end (148) of the combustor panel (110).

## Description

### FIELD

The present disclosure relates to combustor panels, and, more specifically, to castellated combustor panel rails.

### BACKGROUND

A gas turbine engine includes a fan section, a compressor section, a combustor section, and a turbine section. The fan section may drive air along a bypass flowpath while the compressor section may drive air along a core flowpath. In general, during operation, air is pressurized in the compressor section and then mixed with fuel and ignited in the combustor section to generate combustion gases. The combustion gases flow through the turbine section, which extracts energy from the combustion gases to power the compressor section and generate thrust. The combustor section typically includes panels, which may line the combustor shell(s) and provide thermal protection. The panels generally include perimeter rails having holes formed therethrough. However, not all rail/panel geometries are conducive to formation of these holes and may cause the holes to be improperly angled and/or be formed too close an edge of the rail, which can cause breakage or fracture of the rail.

### SUMMARY

A combustor panel is disclosed herein. In accordance with various embodiments, the combustor panel may comprise a surface extending from a first end of the combustor panel to a second end of the combustor panel opposite the first end. A first rail may extend from the surface. The first rail may be located proximate the first end of the combustor panel. The first rail may define a plurality of channels. The first rail may be formed a preselected distance away from the first end of the combustor panel.

In various embodiments, the combustor panel may be a bulkhead panel, and the surface may extend between an inner diameter of the bulkhead panel and an outer diameter of the bulkhead panel. In various embodiments, the first rail may be located proximate the outer diameter.

In various embodiments, a second rail may extend from the surface. The second rail may be located proximate the second end of the combustor panel. In various embodiments, the second rail may define a plurality of second channels. In various embodiments, a distance between the second rail and the second end of the combustor panel may be less than a distance between the first rail and the first end of the combustor panel.

In various embodiments, at least one of a floor of a first channel of the plurality of channels and a surface of the first rail or a floor of a first channel of the plurality of second channels and a surface of the second rail may form an angle greater than 5°.

In various embodiments, a depth of a first channel of the plurality of channels is greater than a depth of a second channel of the plurality of channels. In various embodiments, a sidewall of a first channel of the plurality of channels and a wall of the first rail form an angle between 30° and 150°.

In various embodiments, a width of an inlet of a first channel of the plurality of channels may be greater than a width of an outlet of the first channel. In various embodiments, a width of an outlet of a first channel of the plurality of channels may be greater than a width of an inlet of the first channel.

Also disclosed herein, in accordance with various embodiments, is combustor panel comprising a surface extending from a first end of the combustor panel to a second end of the combustor panel opposite the first end. A castellated first rail may extend from the surface and may be located a preselected distance away from the first end of the combustor panel.

In various embodiments, a depth of a first channel of the castellated first rail may be greater than a depth of a second channel of the castellated first rail.

In various embodiments, the combustor panel may be a bulkhead panel, and the castellated first rail may be located proximate an outer diameter of the bulkhead panel.

In various embodiments, a sidewall of a channel of the castellated first rail and a wall of the castellated first rail may form an angle between 30° and 150°. In various embodiments, a floor of a channel of the castellated first rail may be angled with respect to the surface of the combustor panel.

In various embodiments, a second rail may extend from the surface of the panel. A distance between the first end of the combustor panel and the castellated first rail may be greater than a distance between the second end of the combustor panel and the second rail.

A combustor is also disclosed herein. According to various embodiments, the combustor may comprise an outer shell, an inner shell located radially inward of the outer shell, a bulkhead shell located at a forward end of the combustor, and a panel coupled to at least one of the outer shell, the inner shell, or the bulkhead shell. The panel may comprise a first rail extending from an exterior surface of the panel. The first rail may define a plurality of channels.

In various embodiments, a depth of a first channel of the plurality of channels may be greater than a depth of a second channel of the plurality of channels.

In various embodiments, a sidewall of a first channel of the plurality of channels and a wall of the first rail may form an angle between 30° and 150°.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 illustrates a cross-sectional view of an exemplary gas turbine engine, in accordance with various embodiments;
FIG. 2 illustrates a cross-sectional view of an exemplary combustor, in accordance with various embodiments;
FIGs. 3A and 3B illustrate perspective views of bulkhead combustor panel segments, in accordance with various embodiments;
FIG. 4A, 4B, and 4C illustrate perspective views of a castellated combustor panel rail, in accordance with various embodiments;
FIG. 4D illustrates a cross-sectional view of a castellated combustor panel rail, in accordance with various embodiments; and
FIGs. 4E and 4F illustrate cross-sectional view of channel of a castellated combustor panel rail, in accordance with various embodiments.

### DETAILED DESCRIPTION

The detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that logical aerodynamic, thermodynamic, and mechanical changes may be made without departing from the scope of the disclosure. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full, and/or any other possible attachment option. Additionally, any reference to without contact (or similar phrases) may also include reduced contact or minimal contact.

Cross hatching lines may be used throughout the figures to denote different parts but not necessarily to denote the same or different materials. Throughout the present disclosure, like reference numbers denote like elements. Accordingly, elements with like element numbering may be shown in the figures, but may not necessarily be repeated herein for the sake of clarity.

As used herein, "aft" refers to the direction associated with the tail (e.g., the back end) of an aircraft, or generally, to the direction of exhaust of the gas turbine engine. As used herein, "forward" refers to the direction associated with the nose (e.g., the front end) of an aircraft, or generally, to the direction of flight or motion. As used herein, "proximate" refers to a direction inwards, or generally, towards the reference component. As used herein, "distal" refers to a direction outwards, or generally, away from a reference component.

A first component that is "radially outward" of a second component means that the first component is positioned at a greater distance away from the engine central longitudinal axis than the second component. A first component that is "radially inward" of a second component means that the first component is positioned closer to the engine central longitudinal axis than the second component. In the case of components that rotate circumferentially about the engine central longitudinal axis, a first component that is radially inward of a second component rotates through a circumferentially shorter path than the second component. The terminology "radially outward" and "radially inward" may also be used relative to references other than the engine central longitudinal axis.

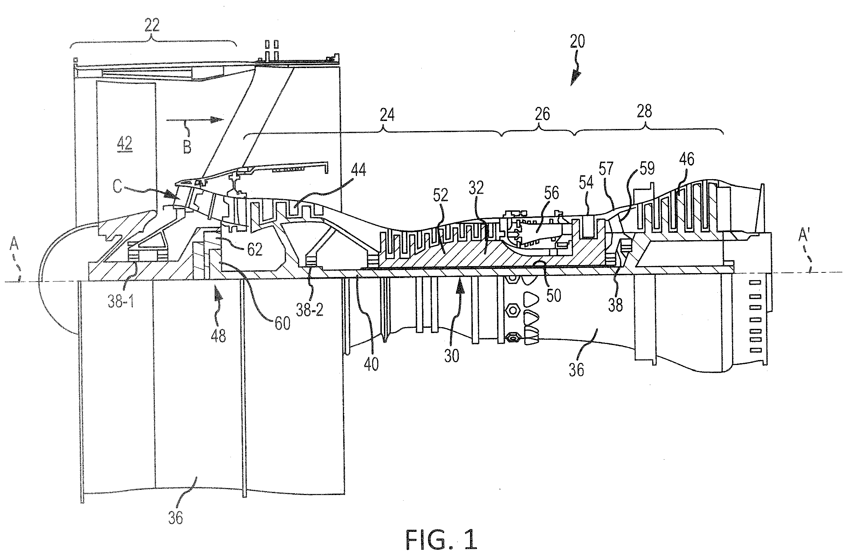

With reference to FIG. 1, a gas turbine engine 20 is provided, in accordance with various embodiments. Gas turbine engine 20 may be a two-spool turbofan that generally incorporates a fan section 22, a compressor section 24, a combustor section 26, and a turbine section 28. Alternative engines may include, for example, an augmentor section among other systems or features. In operation, fan section 22 drives fluid (e.g., air) along a bypass flow-path B while compressor section 24 can drive air along a core flow-path C for compression and communication into combustor section 26 then expansion through turbine section 28. Although depicted as a turbofan gas turbine engine 20 herein, it should be understood that the concepts described herein are not limited to use with turbofans as the teachings may be applied to other types of turbine engines including multi-spool architectures, as well as industrial gas turbines.

Gas turbine engine 20 generally comprises a low speed spool 30 and a high speed spool 32 mounted for rotation about an engine central longitudinal axis A-A' relative to an engine static structure 36 via several bearing systems 38, 38-1, and 38-2. Engine central longitudinal axis A-A' is oriented in the z direction on the provided x-y-z axes. It should be understood that various bearing systems 38 at various locations may alternatively or additionally be provided, including for example, bearing system 38, bearing system 38-1, and bearing system 38-2.

Low speed spool 30 may generally comprise an inner shaft 40 that interconnects a fan 42, a low pressure compressor 44 and a low pressure turbine 46. Inner shaft 40 may be connected to fan 42 through a geared architecture 48 that can drive fan 42 at a lower speed than low speed spool 30. Geared architecture 48 may comprise a gear assembly 60 enclosed within a gear housing 62. Gear assembly 60 couples inner shaft 40 to a rotating fan structure. High speed spool 32 may comprise an outer shaft 50 that interconnects a high pressure compressor 52 and high pressure turbine section 54. A combustor 56 may be located between high pressure compressor 52 and high pressure turbine 54. In various embodiments, engine static structure 36 may include a mid-turbine frame 57. The mid-turbine frame 57, if included, may be located generally between high pressure turbine 54 and low pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The core airflow C may be compressed by low pressure compressor 44 then high pressure compressor 52, mixed and burned with fuel in combustor 56, then expanded through the high pressure turbine 54 and low pressure turbine 46. Turbines 46, 54 rotationally drive the respective low speed spool 30 and high speed spool 32 in response to the expansion.

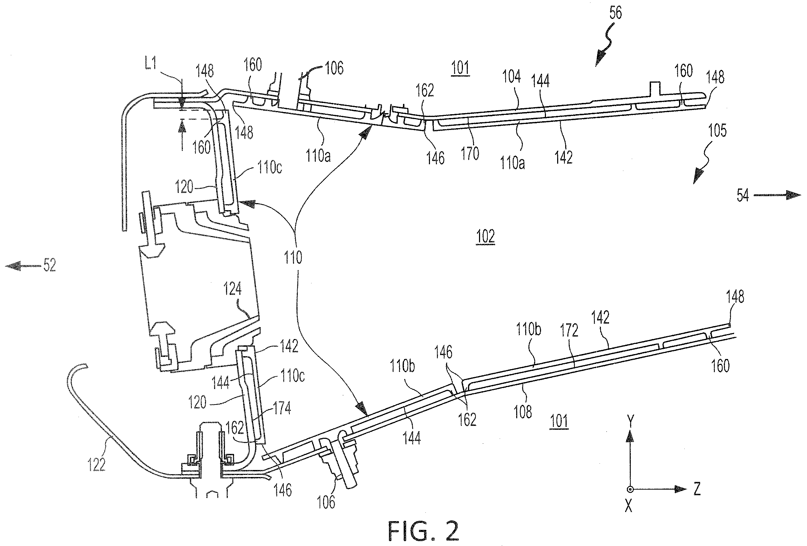

FIG. 2 shows an exemplary cross-section of combustor 56 positioned between high pressure compressor 52 and high pressure turbine 54 of a gas turbine engine 20. Combustor 56 includes a combustion chamber 102 defined by a combustor outer shell 104 and a combustor inner shell 108. Combustor inner shell 108 may be radially inward of combustor outer shell 104. Combustor outer shell 104 and combustor inner shell 108 may provide structural support to combustor 56 and its components. In various embodiments, combustor outer shell 104 and combustor inner shell 108 may comprise substantially cylindrical or a substantially conical canister portion defining combustion chamber 102. A bulkhead shell 120 may be positioned at a forward end of combustion chamber 102. Bulkhead shell 120 extends radially from, and may be coupled to, combustor outer shell 104 and combustor inner shell 108. Combustor 56 further includes an annular hood 122 and a plurality of swirlers 124 (one shown).

A diffuser chamber 101 is located external to combustor 56. Cooling air (e.g., air from bypass flow-path B in FIG. 1) may be configured to flow through diffuser chamber 101 and around combustor 56. Combustion chamber 102 may form a region for mixing of air flowing through core flow-path C (with brief reference to FIG. 1) and fuel. Combustion chamber 102 may be configured to direct the high-speed exhaust gases produced by the ignition of the fuel air mixture inside the combustor 56. The high-speed exhaust gases may be driven downstream within the combustor 56 towards a combustor outlet 105. Combustor outlet 105 may be located forward of a first vane stage of high pressure turbine 54.

It may be desirable to protect combustor outer shell 104, combustor inner shell 108, and bulkhead shell 120 from the high temperatures, flames, and/or combustion gases within combustion chamber 102. Accordingly, one or more combustor panels 110 (also referred to as thermal shields or combustor liners) may be disposed inside combustion chamber 102 and may provide such thermal protection. Combustor panels 110 may be mounted and/or coupled to combustor outer shell 104, combustor inner shell 108, and/or bulkhead shell 120 via one or more attachment features 106, for example, via a threaded stud and nut or other suitable securement mechanism. Combustor panels 110 may be spaced apart from the interior surface of their respective shells. For example, one or more outboard combustor panels 110a may be arranged radially inward of combustor outer shell 104, one or more inboard combustor panels 110b may be arranged radially outward of combustor inner shell 108, and one or more bulkhead panels 110c may be arranged aft of bulkhead shell 120. Outboard combustor panels 110a and inboard combustor panels 110b may comprise a partial cylindrical or conical surface section.

As used herein, an "interior surface" refers to a surface of a combustor shell or a combustor panel that is oriented generally toward combustion chamber 102, and an "exterior surface" refers to a surface of a combustor shell or a combustor panel that is generally opposite the interior surface and oriented generally away from combustion chamber 102.

Combustor panels 110 may be made of any suitable heat tolerant material. In this manner, the combustor panels 110 may be substantially resistant to thermal mechanical fatigue in order to inhibit cracking of the combustor panels 110 and/or to inhibit liberation of portions of the combustor panels 110. In various embodiments, the combustor panels 110 may be made from a nickel based alloy and/or a cobalt based alloy, among others. For example, the combustor panels 110 may be made from a high performance nickel-based super alloy. In various embodiments, the combustor panels 110 may be made from a cobalt-nickel-chromium-tungsten alloy.

Combustor panels 110 each include an interior surface 142 and an exterior surface 144. Interior surface 142 and exterior surface 144 may each extend between a first end 148 and a second end 146 of combustor panels 110. Combustor panels 110 may each include a rail 160 formed proximate first end 148 and a rail 162 formed proximate second end 146. Rails 160 and rails 162 extend from exterior surface 144. Rails 160 and rails 162 may contact an interior surface 170 of combustor outer shell, an interior surface 172 of combustor inner shell 108, and an interior surface 174 of bulkhead shell 120.

In various embodiments, first end 148 and rail 160 may comprise a complex geometry, and second end 146 and rail 162 may comprise a simple geometry. As used herein, a "complex" geometry refers to a panel configuration wherein the rail is recessed, or formed a preselected distance (e.g., distance L1), from an end (e.g., first end 148) of the combustor panel. As used herein, a "simple" geometry refers to a panel configuration wherein a wall of the rail forms an end (e.g., second end 146) of the combustor panel. Stated differently, in various embodiments, a distance L1 between rail 160 and first end 148 may be greater than a distance between rail 162 and second end 146.

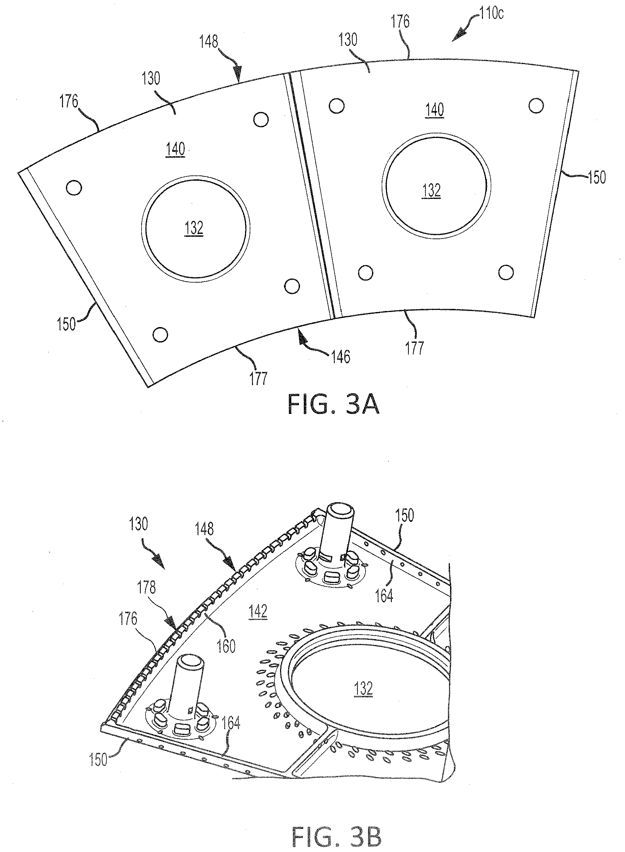

With combined reference to FIGs. 2 and 3A, bulkhead shell 120 and bulkhead panel 110c may be circumferentially distributed about the annular hood 122. In various embodiments, bulkhead shell 120 is generally annular and bulkhead panel 110c may comprise a plurality of circumferentially adjacent arcuate bulkhead panel segments 130. Each bulkhead panel segment 130 may define an opening 132 corresponding to a fuel nozzle and a swirler 124.

Referring now to FIGs. 3A and 3B, and with continued reference to FIG. 2, each bulkhead panel segment 130 comprises interior surface 142 and exterior surface 144 opposite interior surface 142. First end 148 of bulkhead panel 110c may form an outer diameter 176 of bulkhead panel segments 130. Second end 146 of bulkhead panel 110c may form an inner diameter 177 bulkhead panel segments 130. In this regard, inner diameter 177 may be located proximate combustor inner shell 108, and outer diameter 176 may be located proximate combustor outer shell 104. Each bulkhead panel segment 130 further includes radial surfaces 150 extending between outer diameter 176 and inner diameter 177. Rail 160 may be formed proximate to outer diameter 176 (i.e., first end 148). Rail 162 may be formed proximate to inner diameter 177 (i.e., second end 146). In various embodiments, bulkhead panel segments 130 may also include rails 164 formed proximate radial surfaces 150.

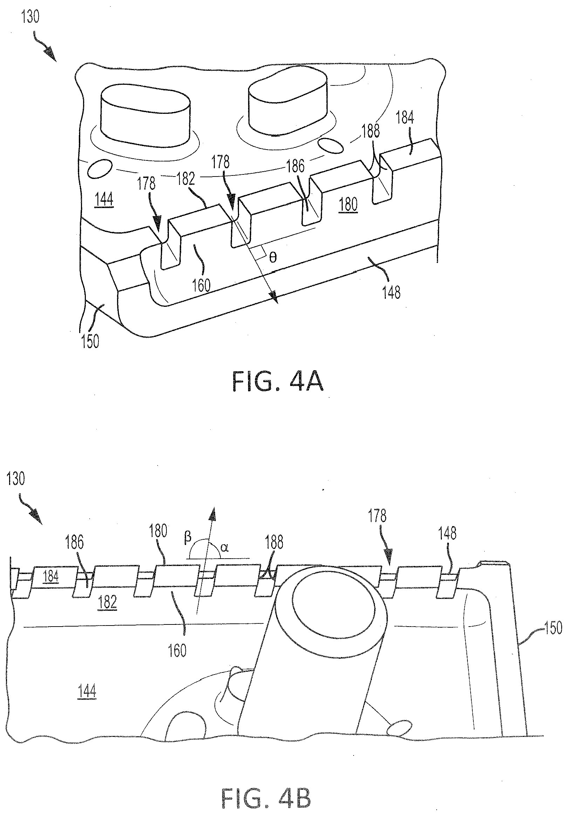

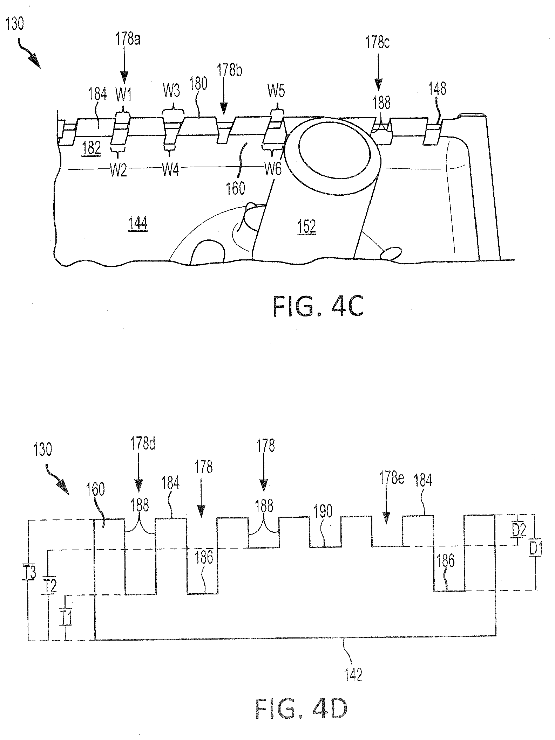

Referring now to FIGs. 4A, 4B and 4C, and with continued reference to FIG. 2, rail 160 may comprise a surface 184 which extends between a surface 180 and a surface 182 of rail 160. Rail 160 may be configured such that surface 184 contacts interior surface 174 of bulkhead shell 120 and forms a sealing interface therewith. Surface 184 may be generally parallel to exterior surface 144, and surface 180 may be generally parallel to surface 182. As used in the previous context only, "generally parallel" means ±5° from parallel. Surface 180 and/or surface 182 may be generally perpendicular to exterior surface 144. As used in the previous context only, "generally perpendicular" means ±5° from perpendicular. Rail 160 may define a plurality of channels 178, such that rail 160 comprises a castellated geometry. Channels 178 may be formed in surface 184 of rail 160 and may extend from surface 180 to surface 182. Channels 178 may each comprise (i.e., be defined by) a pair of sidewalls 188 and a floor, or surface, 186. In various embodiments, floor 186 may be generally parallel to surface 184. As used in the previous context only, "generally parallel" means ±5° from parallel. In various embodiments, floor 186 may be angled such that floor 186 and surface 184 are non-parallel. Floor 186 may extend from surface 180 to surface 182. Sidewalls 188 may extend from floor 186 to surface 184.

In various embodiments, sidewalls 188 may be perpendicular to surface 180, such that an angle theta (θ) formed by one of the sidewalls 188 and surface 180 is 90°. In various embodiments, sidewalls 188 may be angled with respect to surface 180, such that an angle alpha (α) formed by one of the sidewalls 188 and surface 180 is between 20° and 90° and an angle beta (β) formed between the opposing sidewall 188 and surface 180 is between 90° and 160°. In various embodiments, angle alpha is between 30° and 90° and angle beta is between 90° and 150°. In various embodiments, angle alpha is between 50° and 90° and angle beta is between 90° and 130°. In various embodiments, angle alpha is between 75° and 90° and angle beta is between 90° and 105°. The angle of sidewalls 188 may be selected to direct a flow of air exiting channels 178. In this regards, rail 160 may comprise a plurality of channels 178 each having their own unique sidewall 188 geometry.

Referring now specifically to FIG. 4C, in various embodiments, rail 160 may comprise one or more channels 178a having an outlet width W1 that is equal to a width W2 of the inlet of channel 178a. Stated differently, a distance between sidewalls 188 at the outlet of channel 178a is equal to the distance between sidewalls 188 at the inlet of channel 178a. In various embodiments, rail 160 may comprise one or more channels 178b having an outlet width W3 that is greater than a width W4 of the inlet of channel 178b. Stated differently, a distance between sidewalls 188 at the outlet of channel 178b is greater than the distance between sidewalls 188 at the inlet of channel 178b. In various embodiments, rail 160 may comprise one or more channels 178c having an outlet width W5 that is less than a width W6 of the inlet of channel 178c. Stated differently, a distance between sidewalls 188 at the outlet of channel 178c is less than the distance between sidewalls 188 at the inlet of channel 178c.

Referring now specifically to FIG. 4D, in various embodiments, rail 160 may comprise channels of varying depth. In various embodiments, a depth D1 of a channel 178d may be greater than a depth D2 of a channel 178e. Stated differently, a distance between surface 184 of rail 160 and floor 186 of channel 178d may be greater than a distance between surface 184 of rail 160 and floor 190 of channel 178e. Stated yet another way, a thickness T1 of rail 160 measured from interior surface 142 to floor 186 of channel 178d is less than a thickness T2 of rail 160 measured from interior surface 142 to floor 190 of channel 178e. In various embodiments, thickness T1 is between 0.025 inches and 0.095 inches (i.e., between 0.064 cm and 0.241 cm). In various embodiments, thickness T1 is between 0.030 inches and 0.060 inches (i.e., between 0.076 cm and 0.152 cm). In various embodiments, thickness T1 is between 0.03 inches and 0.04 inches (i.e., between 0.076 cm and 0.101 cm). In various embodiment, a thickness T3 of rail 160, measured from interior surface 142 to surface 184, is between 0.07 inches and 0.5 inches (i.e., between 0.178 cm and 1.270 cm). In various embodiment, thickness T3 of rail 160 is between 0.09 inches and 0.3 inches (i.e., between 0.229 cm and 0.782 cm). In various embodiment, thickness T3 of rail 160 is between 0.1 inches and 0.15 inches (i.e., between 0.254 cm and 0.381 cm).

With combined reference to FIGs. 4C and 4D, in various embodiments, floor 186 of one or more channels 178 may be angled with respect to exterior surface 144. Stated differently, one or more channels 178 may comprise a floor 186 that is non-parallel to exterior surface 144. For example, in various embodiments, rail 160 may comprise thickness T1 at the inlet of channel 178a (i.e., proximate to surface 182) and thickness T2 at the outlet of channel 178a (i.e., proximate to surface 180). In various embodiments, rail 160 may comprise thickness T1 at the outlet of channel 178b (i.e., proximate to surface 180) and thickness T2 at the inlet of channel 178b (i.e., proximate to surface 182).

While FIGs. 4A, 4B, 4C, and 4D illustrate features of channels 178 formed in rail 160 of bulkhead panel 110c, it should be understood that rail 162 of bulkhead panel 110c and rails 160 and 162 of outboard combustor panels 110a and inboard combustor panels 110b, with momentary reference to FIG. 2, may include the elements and functionalities as described herein with respect to channels 178 and rail 160 of bulkhead panel 110c.

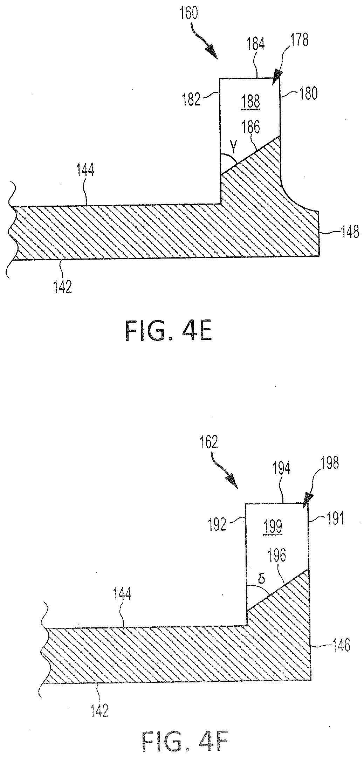

With reference to FIG. 4E, a cross-sectional view of a channel 178 of rail 160 is illustrated, in accordance with various embodiments. In various embodiments, floor 186 of channel 178 may be formed at an angle gamma (γ) with respect to surface 182 of rail 160. In various embodiments, angle gamma may be greater than 5°. In various embodiments, angle gamma may be greater than 15°. In various embodiments, angle gamma may be greater than 35°. Angle gamma may be selected to angle, or direct, the flow of air exiting channel 178 at a particular target, for example, at the rail of an adjacent combustor panel. Castellated rail 160 may allow floor 186, and the air the exiting channel 178, to be angled at steeper, or greater, angles as compared to cylindrical rail through holes.

With reference to FIG. 4F, a cross-sectional view of a channel 198 formed in rail 162 is illustrated, in accordance with various embodiments. Channel 198 may be formed in a surface 194 of rail 162 and may extend between opposing surfaces 191 and 192 of rail 162. Channel 198 may comprise (i.e., be defined by) a pair of sidewalls 199 and a floor 196. In various embodiments, floor 196 of channel 198 may be formed at an angle delta (δ) with respect to surface 192 of rail 162. In various embodiments, angle delta may be greater than 5°. In various embodiments, angle delta may be greater than 15°. In various embodiments, angle delta may be greater than 35°. Angle delta may be selected to angle, or direct, the flow of air exiting channel 198 at a particular target, for example, at the rail of an adjacent combustor panel. Castellated rail 162 may allow floor 196, and the air the exiting channel 198, to be angled at steeper, or greater, angles as compared to cylindrical rail through holes.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the inventions. The scope of the inventions is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element is intended to invoke 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A combustor panel, comprising:
a surface extending from a first end of the combustor panel to a second end of the combustor panel opposite the first end; and
a first rail extending from the surface and located proximate the first end of the combustor panel, the first rail defining a plurality of channels, wherein the first rail is formed a preselected distance away from the first end of the combustor panel.

2. The combustor panel of claim 1, wherein the combustor panel is a bulkhead panel, and the surface extends between an inner diameter of the bulkhead panel and an outer diameter of the bulkhead panel.

3. The combustor panel of claim 2, wherein the first rail is located proximate the outer diameter.

4. The combustor panel of claim 1, 2 or 3, further comprising a second rail extending from the surface and located proximate the second end of the combustor panel.

5. The combustor panel of claim 4, wherein a distance between the second rail and the second end of the combustor panel is less than a distance between the first rail and the first end of the combustor panel.

6. The combustor panel of claim 5, wherein the second rail defines a plurality of second channels.

7. The combustor panel of claim 6, wherein at least one of a floor of a first channel of the plurality of channels and a surface of the first rail or a floor of a first channel of the plurality of second channels and a surface of the second rail form an angle greater than 5°.

8. The combustor panel of any preceding claim, wherein a width of an inlet of a first channel of the plurality of channels is greater than a width of an outlet of the first channel.

9. The combustor panel of any preceding claim, wherein a width of an outlet of a first channel of the plurality of channels is greater than a width of an inlet of the first channel.

10. A combustor panel, comprising:
a surface extending from a first end of the combustor panel to a second end of the combustor panel opposite the first end; and
a castellated first rail extending from the surface and located a preselected distance away from the first end of the combustor panel.

11. The combustor panel of claim 10, wherein a depth of a first channel of the castellated first rail is greater than a depth of a second channel of the castellated first rail.

12. The combustor panel of claim 10 or 11, wherein the combustor panel is a bulkhead panel, and wherein the castellated first rail is located proximate an outer diameter of the bulkhead panel, and/or
wherein, optionally, a sidewall of a channel of the castellated first rail and a wall of the castellated first rail form an angle between 30° and 150°, and/or
optionally further comprising a second rail extending from the surface of the combustor panel, wherein a distance between the first end of the combustor panel and the castellated first rail is greater than a distance between the second end of the combustor panel and the second rail, and/or
wherein, optionally, a floor of a channel of the castellated first rail is angled with respect to the surface of the combustor panel.

13. A combustor, comprising:
an outer shell;
an inner shell located radially inward of the outer shell;
a bulkhead shell located at a forward end of the combustor; and
a panel coupled to at least one of the outer shell, the inner shell, or the bulkhead shell, the panel comprising a first rail extending from an exterior surface of the panel, wherein the first rail defines a plurality of channels.

14. The combustor panel of any of claims 1 to 9, or the combustor of claim 13, wherein a depth of a first channel of the plurality of channels is greater than a depth of a second channel of the plurality of channels.

15. The combustor panel of any of claims 1 to 9 or 14, or the combustor of claim 13 or 14, wherein a sidewall of a first channel of the plurality of channels and a wall of the first rail form an angle between 30° and 150°.
